# EUROPÄISCHE PATENTSCHRIFT

(11) **EP 3 622 247 B1**
(45) Veröffentlichungstag und Bekanntmachung des Hinweises auf die Patenterteilung: **02.06.2021**
(21) Anmeldenummer: 18725147.5
(22) Anmeldetag: 08.05.2018
(51) Int. Cl.: G01B 11/25

(54) **VERFAHREN ZUR REFERENZIERUNG MEHRERER SENSOREINHEITEN UND ZUGEHÖRIGE MESSEINRICHTUNG**
METHOD FOR REFERENCING A PLURALITY OF SENSOR UNITS AND ASSOCIATED MEASURING DEVICE
PROCÉDÉ POUR RÉFÉRENCER PLUSIEURS UNITÉS DE DÉTECTION ET DISPOSITIF DE MESURE ASSOCIÉ

(30) Priorität: 08.05.2017 DE 102017109854
(43) Veröffentlichungstag der Anmeldung: 18.03.2020
(73) Patentinhaber: Wobben Properties GmbH, 26607 Aurich (DE)
(72) Erfinder: GORSCHENEW, Waldemar, 30655 Hannover (DE)
(74) Vertreter: Eisenführ Speiser
(86) Internationale Anmeldenummer: PCT/EP2018/061768
(87) Internationale Veröffentlichungsnummer: WO 2018/206527

(56) Entgegenhaltungen:
- WO-A1-2004/011876
- US-A1- 2004 246 473
- US-A1- 2014 253 929
- US-A1- 2016 300 383

## Beschreibung

Die Erfindung betrifft ein Verfahren zur Referenzierung mehrerer Sensoreinheiten, die zur Vermessung einer dreidimensionalen Oberfläche eines Messobjektes um das Messobjekt herum anordenbar sind sowie ein Verfahren zum Vermessen eines Messobjektes und eine zugehörige Messeinrichtung.

Die genaue Vermessung dreidimensionaler Objekte ist in vielen Anwendungsbereichen, beispielsweise in der Produktion, Qualitätssicherung, et cetera relevant. Um die Dauer der Vermessung großer Objekte zu verringern, werden Messanordnungen umfassend mehrere Messeinheiten eingesetzt. Die Messeinheiten müssen um das Messobjekt herum anordenbar sein und können so gleichzeitig Teile des Objektes aus unterschiedlichen Perspektiven vermessen. Beispielsweise können die Messeinheiten Oberflächenmesseinheiten sein, die auf optischen Prinzipien basieren.

Eine Herausforderung derartiger Messanordnungen ist es, intrinsische Koordinatensysteme der einzelnen Messeinheiten zueinander zu einem Weltkoordinatensystem zu referenzieren. Hierfür ist bekannt, Referenzpunkte mit verschiedenen Messeinheiten aufzunehmen, beispielsweise mittels eines Kalibriermusters, und die Position der Referenzpunkte, die dann in Kamerakoordinaten bekannt ist, zwischen den mehreren Messeinheiten zu transformieren.

So werden beispielsweise in den Druckschriften US 2017/0054965 A1 und WO 2004/011876 A1 Referenzpunkte optisch auf die zu vermessenden Objekte projiziert. Aber auch die Verwendung von separaten Kalibrierobjekten ist zum Beispiel aus den Druckschriften US 2016/0300383 A1 und DE 10 2013 103 252 A1 bekannt. Systeme und Verfahren zur dreidimensionalen Oberflächenvermessung sind auch in den Druckschriften US 2014/253929 A1 und US 2004/246473 A1 offenbart.

Solche Verfahren zur Bestimmung der Referenzierung der mehreren Sensoreinheiten weisen den Nachteil auf, dass die Transformation zwischen Koordinatensystemen mehrerer Sensoreinheiten auf einer Rekonstruktion der Referenzpunkte beruht, die naturgemäß fehlerbehaftet ist. Je größer der Unterschied im Betrachtungswinkel zwischen zwei Messeinheiten ist, desto stärker wirkt sich der Rekonstruktionsfehler auf die Referenzierung aus. Gerade bei hochgenauen Anwendungen ist eine derartige, auf der Rekonstruktion basierende Referenzierung somit nicht hinreichend genau.

Es war somit eine Aufgabe der vorliegenden Erfindung, ein Verfahren zur Referenzierung mehrerer Sensoreinheiten sowie eine zugehörige Messeinrichtung zur Vermessung einer Oberfläche eines Messobjektes dahingehend zu verbessern, dass eine genauere Vermessung der Oberfläche des Messobjektes erreicht wird.

Die Aufgabe wird erfindungsgemäß durch ein Verfahren zur Referenzierung mehrerer Sensoreinheiten, die zur Vermessung einer dreidimensionalen Oberfläche eines Messobjektes um das Messobjekt herum anordenbar sind, gelöst. Jede Sensoreinheit weist eine Quelle strukturierter Beleuchtung und in festem Abstand dazu eine kalibrierte optische Kamera auf. Ein Kegel der Quelle strukturierter Beleuchtung ist bezüglich der Kamera kalibriert und eine Transformation der Abbildung der strukturierten Beleuchtung, die von der Kamera aufgenommen wird, aus zweidimensionalen Bildpunkten in dreidimensionale Kamerakoordinaten durch die Kalibrierung der Sensoreinheit ist bestimmt.

Das Verfahren weist die folgenden Schritte auf: i) Bestimmen von Positionen mehrerer Referenzpunkte in zweidimensionalen Bildkoordinaten von Kameras einer ersten und einer zweiten Sensoreinheit, ii) Rekonstruieren der Positionen der mehreren Referenzpunkte in dreidimensionalen Kamerakoordinaten der ersten Sensoreinheit und der zweiten Sensoreinheit, iii) Bestimmen einer Transformation zwischen den dreidimensionalen Kamerakoordinaten der ersten Sensoreinheit und den dreidimensionalen Kamerakoordinaten der zweiten Sensoreinheit basierend auf den rekonstruierten Positionen der Referenzpunkte, iv) Rekonstruieren der Position der Abbildung der strukturierten Beleuchtung in den dreidimensionalen Kamerakoordinaten der ersten Sensoreinheit und der zweiten Sensoreinheit anhand der rekonstruierten Referenzpunkte, v) Bestimmen einer triangulierten Position der Abbildung der strukturierten Beleuchtung in dreidimensionalen Kamerakoordinaten der ersten Sensoreinheit und der zweiten Sensoreinheit und vi) Korrigieren der Transformation zwischen den dreidimensionalen Kamerakoordinaten der ersten Sensoreinheit und den dreidimensionalen Kamerakoordinaten der zweiten Sensoreinheit basierend auf den triangulierten Positionen der Abbildung der strukturierten Beleuchtung.

Ein erfindungsgemäß äquivalentes Verfahren zur Lösung der gleichen oben genannten Aufgabe weist die folgenden Schritte auf: i) Bestimmen von Positionen mehrerer Referenzpunkte in zweidimensionalen Bildkoordinaten von Kameras einer ersten und einer zweiten Sensoreinheit, ii) Bestimmen je einer Koordinatentransformation zwischen dem Kamerakoordinatensystem und dem Koordinatensystem der Referenzpunkte der ersten und der zweiten Sensoreinheit, iii) Rekonstruieren der Position der Abbildung der strukturierten Beleuchtung in den dreidimensionalen Kamerakoordinaten der ersten Sensoreinheit und der zweiten Sensoreinheit anhand der bestimmten Koordinatentransformationen, iv) Bestimmen einer triangulierten Position der Abbildung der strukturierten Beleuchtung in dreidimensionalen Kamerakoordinaten der ersten Sensoreinheit und der zweiten Sensoreinheit und v) Ermitteln einer Korrekturtransformation zwischen der rekonstruierten Abbildung und der triangulierten Abbildung für jede Sensoreinheit, wodurch die bestimmten Koordinatentransformationen zwischen dem Kamerakoordinatensystem und dem Koordinatensystem der Referenzpunkte der ersten und der zweiten Sensoreinheit korrigiert werden, wobei eine Referenzierung von der ersten Sensoreinheit zur zweiten Sensoreinheit anhand der korrigierten Transformationen hergestellt wird.

Anders ausgedrückt wird demnach vorzugsweise die Korrekturtransformation zum Korrigieren der rekonstruierten Position der Abbildung der strukturierten Beleuchtung und/oder zum Korrigieren einer Transformation zwischen den dreidimensionalen Kamerakoordinaten der ersten Sensoreinheit und den dreidimensionalen Kamerakoordinaten der zweiten Sensoreinheit basierend auf den triangulierten Positionen der Abbildung der strukturierten Beleuchtung ermittelt und damit die Genauigkeit der Referenzierung der Sensoreinheiten untereinander verbessert.

Somit werden die gleichen Referenzpunkte oder nur Teile der Referenzpunkte, wenn ein definiertes Koordinatensystem in den Referenzpunkten vorliegt, gleichzeitig oder nacheinander von wenigstens zwei der Kameras der Sensoreinheiten aufgenommen. Für jede der Sensoreinheiten wird eine Lage der Referenzpunkte, die beispielsweise Teil eines Kalibriermusters sind, im 3D-Raum bestimmt bzw. aus den zweidimensionalen Bildkoordinaten in dreidimensionale Kamerakoordinaten rekonstruiert. Da es sich um die gleichen Referenzpunkte handelt, lassen sich die so rekonstruierten Positionen der Referenzpunkte aus den jeweiligen dreidimensionalen Kamerakoordinatensystemen in ein gemeinsames Weltkoordinatensystem transformieren.

Diese Transformation führt allerdings, da sie auf rekonstruierten Koordinatentransformationen bzw. Positionen der Referenzpunkte basiert, zu Fehlern, die erfindungsgemäß mittels einer zusätzlich durchgeführten Triangulation korrigiert werden. Insbesondere werden, vorzugsweise nacheinander, Abbildungen der strukturierten Beleuchtung durch jede der Sensoreinheiten aufgenommen, die ebenso wie die Referenzpunkte rekonstruiert werden. Zusätzlich ermöglicht die bekannte Kalibrierung zwischen der Quelle strukturierter Beleuchtung und der optischen Kamera, dass der Abbildung der strukturierten Beleuchtung eine triangulierte Position zugeordnet werden kann. Die triangulierte Position ermöglicht aufgrund der kalibrierten Beziehung zwischen Beleuchtungsquelle und Kamera eine genauere Position der Abbildung. Erfindungsgemäß wird dann in vorteilhafter Weise die Transformation zwischen dreidimensionalen Kamerakoordinaten, die zunächst basierend auf eine Rekonstruktion bestimmt ist, mittels der triangulierten Positionen der Abbildungen sowohl der ersten Sensoreinheit als auch der zweiten Sensoreinheit bzw. deren Abweichung von der rekonstruierten Position der Abbildung korrigiert.

Die Kalibrierung der optischen Kameras umfasst eine Kalibrierung intrinsischer und extrinsischer Kameraparameter. Beispielsweise wird die Kalibrierung nach Zhang, nach Tsai oder nach anderen bekannten Kalibrierungsmethoden durchgeführt.

Die Kalibrierung der Quelle strukturierter Beleuchtung bezüglich der optischen Kamera erfolgt in einer Ausführung, indem mehrere Abbildungen der strukturierten Beleuchtung aufgenommen werden, dann rekonstruiert werden und der Kegel der Quelle strukturierter Beleuchtung beispielsweise über eine Singulärwertzerlegung eingepasst wird. Selbstverständlich sind auch andere Verfahren zur Kalibrierung der Quelle strukturierter Beleuchtung bezüglich der optischen Kamera möglich.

Das erfindungsgemäße Verfahren beruht auf Sensoreinheiten, die jeweils eine Quelle strukturierter Beleuchtung sowie eine dazu kalibrierte optische Kamera aufweisen. In anderen nicht beanspruchten Ausführungsformen können die Quellen strukturierter Beleuchtung auch unabhängig von den kalibrierten optischen Kameras bereitgestellt werden.

In einer Ausführungsform weisen die Sensoreinheiten Laserlinienquellen als Quelle strukturierter Beleuchtung auf und die Abbildung der strukturierten Beleuchtung ist eine Laserlinie. Der Kegel der strukturierten Beleuchtung ist in dieser Ausführungsform eine Laserebene, die bezüglich der Kamerakoordinaten kalibriert ist. Eine Abbildung der Laserlinie in zweidimensionalen Bildpunkten entspricht somit einem Schnittpunkt der Laserebene mit der Oberfläche des Messobjektes, die über eine Triangulation anhand des Strahlenganges einfach bestimmbar ist. Obwohl in dieser Ausführungsform Laserlinien und Laserschnittsensoren als Beispiele für Quellen strukturierter Beleuchtung vorgeschlagen werden, so können in anderen Ausführungsformen auch andere, beliebige Quellen strukturierter Beleuchtung verwendet werden.

Vorzugsweise wird während des Prozesses der Laserebenenkalibrierung die Laserlinie beispielsweise über einen Bandpassfilter segmentiert. Hierzu kann vorzugsweise eine hohe Leistung der Laserlinienquelle zusammen mit einer Reduzierung der Belichtungszeit der optischen Kamera zu einer nahezu ausschließlichen Sichtbarkeit der Laserlinie in dem Abbildungsbild führen. Indem vorzugsweise Laserlicht einer einzigen Wellenlänge verwendet wird, beispielsweise rotes Laserlicht, können störende Wellenlängen darüber hinaus über einen Bandpassfilter vor der Kamera herausgefiltert werden. Weiter kann durch die Verwendung einer monochromatischen Lichtquelle das Auftreten von chromatischen Aberrationen oder anderen Abbildungsfehlern vermieden werden.

In einer Ausführungsform betrifft die Referenzierung mehr als zwei Sensoreinheiten, wobei sämtliche der Sensoreinheiten zueinander referenziert werden. Vorteilhaft ist somit möglich, die strukturierten Beleuchtungen, die von jeder der Sensoreinheiten aufgenommen werden, in einem globalen Koordinatensystem zusammenzufügen. Damit kann eine gesamte Oberfläche des Messobjektes bestimmt werden.

In einer Ausführungsform werden sämtliche der Sensoreinheiten direkt oder indirekt zu der ersten Sensoreinheit referenziert. Der Fehler einer Transformation zwischen Kamerakoordinatensystemen zweier Sensoreinheiten steigt mit Unterschied der Position und der Orientierung der jeweiligen Kameras. Bei der indirekten Referenzierung wird eine Sensoreinheit mittelbar über eine dritte Sensoreinheit zu der ersten Sensoreinheit referenziert. Dadurch werden zwei Transformationen, nämlich zwischen der zweiten und der dritten sowie zwischen der dritten und der ersten Sensoreinheit, miteinander kombiniert. Die zweite und dritte Sensoreinheit sind natürlich nur beispielhaft für sämtliche der Sensoreinheiten, das Vorgehen ist auch auf alle weiteren möglichen Sensoreinheiten anwendbar. Je nach Anordnung der Sensoreinheiten kann somit die Art der Referenzierung gewählt werden, die den kleinsten Fehler ermöglicht.

In einer Ausführungsform werden die Sensoreinheiten in einer Ebene angeordnet. Dies ergibt insbesondere dann Vorteile, wenn Profilschnitte des Messobjektes von Interesse sind. Beispielsweise in dem Fall, in dem die Sensoreinheiten Laserlinienquellen umfassen, können damit Oberflächenprofilschnitte des Messobjektes aufgenommen werden.

In einer Ausführungsform weisen die Sensoreinheiten Laserlinienquellen als Quelle strukturierter Beleuchtung auf und die Laserebenen der Sensoreinheiten stimmen im Wesentlichen überein.

Beispielsweise bei der Anwendung auf Rotorblätter für Windenergieanlagen als Messobjekte eignen sich derartig erfasste Profiloberflächenschnitte, die in der Laserebene der Sensoreinheiten liegen, zur CFD-Simulation mit hoher Genauigkeit. Verschiedene derartige Oberflächenprofilschnitte können dann zu einem gesamten Oberflächenprofil des Messobjektes, hier des Rotorblattes, zusammengefügt werden.

In einer Ausführungsform wird die relative Position der Sensoreinheiten zueinander verändert, wobei die Referenzierung der Sensoreinheiten entsprechend der relativen Position der Sensoreinheiten angepasst wird.

Auch diese Ausführungsform ist vorzugsweise besonders für Messobjekte geeignet, bei denen Skaleneffekte der Ausdehnung auftreten. Ein Beispiel derartiger Messobjekte sind Rotorblätter von Windenergieanlagen. Diese weisen in ihrem nabennahen Bereich sehr große Profildurchmesser und -umfänge auf, die im Allgemeinen zur Blattspitze hin abnehmen. Um die gleiche Messgenauigkeit, das heißt Auflösung je Flächenelement der Oberfläche, in sämtlichen Bereichen des Rotorblattes zu erreichen, ist es vorteilhaft, die relative Position der Sensoreinheiten zueinander und zu dem Messobjekt zu verändern. Insbesondere können damit Sensoreinheiten näher an das Messobjekt herangeführt bzw. weiter von dem Messobjekt weg bewegt werden, um die benötigte Auflösung zu gewährleisten. Die Referenzierung wird in vorteilhafter Weise an die relative Position angepasst, sodass trotz Änderung der relativen Position der Sensoreinheiten mittels der strukturierten Beleuchtung erfasste Ausschnitte der Oberfläche des Messobjektes zu einer gesamten Oberfläche des Messobjektes zusammengefügt werden können.

In einer Ausführungsform sind die mehreren Referenzpunkte koplanar. Dies kann beispielsweise über ein Kalibrierungsmuster, beispielsweise in Form eines Schachbrettmusters, erfolgen. In anderen Ausführungsformen sind auch Kalibrierungsmuster, die nicht in einer Ebene liegen, sondern beispielsweise dreidimensionale Ausdehnungen haben, möglich.

In einer Ausführungsform umfasst der Schritt des Rekonstruierens der Position der mehreren Referenzpunkte in dreidimensionalen Kamerakoordinaten ein Perspective-n-Point Verfahren.

Das Perspective-n-Point Verfahren eignet sich besonders für die Schätzung einer Pose, das heißt der Bestimmung einer Ebene, koplanarer Punkte. Allerdings ist das Perspective-n-Point Verfahren nur ein Beispiel zum Rekonstruieren der Position der mehreren Referenzpunkte, andere Verfahren sind beispielsweise auf der Epipolargeometrie beruhend und/oder schließen weitere, dem Fachmann bekannte Verfahren ein.

In einer Ausführungsform umfasst der Schritt des Korrigierens der Transformation zwischen den dreidimensionalen Kamerakoordinaten der ersten Sensoreinheit und den dreidimensionalen Kamerakoordinaten der zweiten Sensoreinheit basierend auf den triangulierten Positionen der Abbildungen der strukturierten Beleuchtung eine Starrkörpertransformation.

Als Starrkörpertransformation wird eine euklidische Transformation ohne Spiegelungen aus einem dreidimensionalen Raum in einen dreidimensionalen Raum oder aus einem zweidimensionalen Raum in einen zweidimensionalen Raum verstanden. Die Starrkörpertransformation besteht nur aus Rotation und Translation, wobei es nicht zu einer Skalierung, Scherung, et cetera kommt. Im Gegensatz dazu kommt es bei einer Transformation über beispielsweise Perspective-n-Point unter Verwendung einer direkten Lineartransformation zu einer projektiven Transformation, die nicht starr ist. Hierbei handelt es sich um eine Transformation beispielsweise von zweidimensionalen zu dreidimensionalen Koordinaten, die durch eine Projektionsmatrix bestimmt wird, die sich aus Rotationskomponenten, Translationskomponenten, sowie zusätzlich Skalierungs- und/oder Scherungskomponenten zusammensetzt.

Die Aufgabe wird erfindungsgemäß ferner durch ein Verfahren zum Vermessen eines Messobjektes gelöst, wobei das Messobjekt mit mehreren zueinander nach einem Verfahren gemäß einem der erfindungsgemäßen Ausführungsformen referenzierten Sensoreinheiten vermessen wird, wobei die Sensoreinheiten zum Erfassen eines Oberflächenausschnittes des Messobjektes eingerichtet sind, wobei die Sensoreinheiten dazu insbesondere in einer Messebene angeordnet sind.

Indem das Verfahren zum Vermessen die nach einer erfindungsgemäßen Ausführungsform referenzierten Sensoreinheiten verwendet, wird eine besonders genaue Vermessung des Messobjektes ermöglicht. Insbesondere wird dadurch ermöglicht, dass die Oberflächenausschnitte des Messobjektes, die von den jeweiligen Sensoreinheiten erfasst werden, zu einem größeren Abschnitt der Oberfläche zusammengesetzt werden, wobei das Zusammensetzen mittels der Referenzierung erfolgt. Indem die Sensoreinheiten dazu zusätzlich insbesondere in einer Messebene angeordnet sind, wird eine besonders einfache Berechnung ermöglicht. Insbesondere in dem Fall, in dem es sich um Laserlichtschnittsensoren handelt, sind damit Oberflächenprofilausschnitte erreichbar, die sich vorzugsweise zu einem gesamten Oberflächenprofilschnitt zusammensetzen, wobei jede der Sensoreinheiten einen Beitrag zu dem Oberflächenprofilschnitt liefert.

Das Messobjekt ist vorzugsweise ein Rotorblatt einer Windenergieanlage, das Verfahren eignet sich jedoch besonders für große oder komplex geformte Messobjekte, die den Einsatz mehrerer Sensoreinheiten oder Ansichten erfordern.

In einer Ausführungsform werden die Sensoreinheiten relativ zu dem Messobjekt bewegt und mehrere Oberflächenausschnitte zu einer Oberfläche des Messobjektes zusammengefügt.

Indem die Sensoreinheiten relativ zu dem Messobjekt bewegt werden, kann vorteilhafterweise das gesamte Messobjekt vermessen werden. Insbesondere kann die Relativbewegung der gesamten Sensoreinheiten bezüglich eines ortsfesten Punktes bestimmt werden und diese Relativbewegung zum Zusammenfügen der Oberflächenausschnitte zu einer Oberfläche verwendet werden. In einer bevorzugten Ausführung werden Oberflächenprofilschnitte, beispielsweise durch Laserschnittsensoren erhalten, zu einem gesamten Oberflächenprofil des Messobjektes zusammengesetzt. Vorzugsweise ist die Auflösung dieser zusammengesetzten Oberfläche hinreichend groß, sodass beispielsweise CFD-Simulationen durchführbar sind.

In einer Ausführungsform werden die relativen Abstände der Sensoreinheiten zueinander an verschiedenen Positionen des Messobjektes verändert, wobei die Referenzierung der Sensoreinheiten an die relativen Abstände der Sensoreinheiten angepasst wird.

Durch die Veränderung der relativen Abstände der Sensoreinheiten wird ermöglicht, dass die Auflösung der Vermessung der Oberfläche des Messobjektes nicht durch verschiedene Profildurchmesser des Messobjektes an verschiedenen Stellen beeinträchtigt wird. Insbesondere kann eine gleichmäßige Auflösung der Oberfläche über das gesamte Messobjekt gesichert werden.

In einer Ausführungsform werden die relativen Abstände der Sensoreinheiten stufenweise verändert. Die Referenzierung der Sensoreinheiten wird an die relativen Abstände der Sensoreinheiten angepasst nachdem die Änderung stufenweise erfolgt, kann eine vorher ermittelte Referenzierung, beispielsweise für die jetzt eingestellte Stufe des relativen Abstandes, herangezogen werden. Alternativ sind auch kontinuierliche Veränderungen der Relativpositionen der Sensoreinheiten möglich, wobei die relativen Abstände vorzugsweise über eine Interpolation für die Referenzierung berücksichtigt werden. Alternativ kann natürlich auch nach dem Ändern des relativen Abstandes jeweils die Referenzierung durchgeführt werden.

In einer Ausführungsform sind die Oberflächenausschnitte Oberflächenprofilausschnitte, die zu einem Oberflächenprofilschnitt zusammengesetzt werden, wobei mehrere Oberflächenprofilschnitte zu einem Oberflächenprofil zusammengefügt werden.

Die Aufgabe wird erfindungsgemäß ferner durch eine Messeinrichtung zur Vermessung einer Oberfläche eines Messobjektes gelöst, wobei die Messeinrichtung mehrere in einer Messebene angeordnete Sensoreinheiten und eine Positionsüberwachungseinheit aufweist, wobei die Sensoreinheiten dazu eingerichtet sind, mittels eines Verfahrens gemäß einer der erfindungsgemäßen Ausführungsformen in der Messebene referenziert zu werden, wobei die Positionsüberwachungseinheit dazu eingerichtet ist, die Position der Messebene bezüglich einer ortsfesten Referenz zu bestimmen. Das Messobjekt ist vorzugsweise ein Rotorblatt einer Windenergieanlage.

Die erfindungsgemäße Messeinrichtung erreicht sämtliche Vorteile, die durch das erfindungsgemäße Verfahren zur Referenzierung der Sensoreinheiten bzw. das Verfahren zum Vermessen des Messobjektes erreicht werden. Insbesondere ist die erfindungsgemäße Messeinrichtung geeignet, sämtliche der bevorzugten Ausführungen der beschriebenen Verfahren umzusetzen. Obwohl ein Rotorblatt einer Windenergieanlage als bevorzugtes Messobjekt genannt ist, ist die Anwendung der erfindungsgemäßen Messeinrichtung nicht darauf beschränkt, und sämtliche weitere Messobjekte, deren Oberflächen vermessen werden, können durch die erfindungsgemäße Messeinrichtung präzise vermessen werden.

In einer Ausführungsform weist die Messeinrichtung weiter eine Bewegungseinheit zum Bewegen der Messebene relativ zu dem Messobjekt auf.

Indem die Messeinrichtung relativ zu dem Messobjekt bewegt werden kann, können auch große Messobjekte mittels der erfindungsgemäßen Messeinrichtung vollständig vermessen werden. Vorzugsweise ermöglicht die Bewegungseinheit eine lineare Bewegung entlang des Messobjektes, was besonders für längliche Messobjekte, wie eben Rotorblätter von Windenergieanlagen oder auch Tragflächen und Ähnliches geeignet ist. Ausführungsbeispiele sowie durch die erfindungsgemäßen Lösungen erzielte Vorteile werden im Folgenden mit Verweis auf die beigefügten Figuren beschrieben.
Fig. 1 zeigt schematisch ein Ausführungsbeispiel einer Messeinrichtung,
Fig. 2 zeigt schematisch und exemplarisch das Funktionsprinzip eines Laserschnittsensors,
Fig. 3a und 3b zeigen schematisch und exemplarisch eine Positionsbestimmungseinheit des erfindungsgemäßen Messsystems,
Fig. 4 zeigt exemplarisch ein Flussdiagramm eines erfindungsgemäßen Verfahrens zur Referenzierung mehrerer Sensoreinheiten,
Fig. 5 zeigt schematisch und exemplarisch das Prinzip der Kamerakalibrierung,
Fig. 6 zeigt schematisch und exemplarisch die Referenzierung mehrerer Sensoreinheiten und
Fig. 7 zeigt schematisch und exemplarisch die Korrektur der Referenzierung aus Fig. 6.

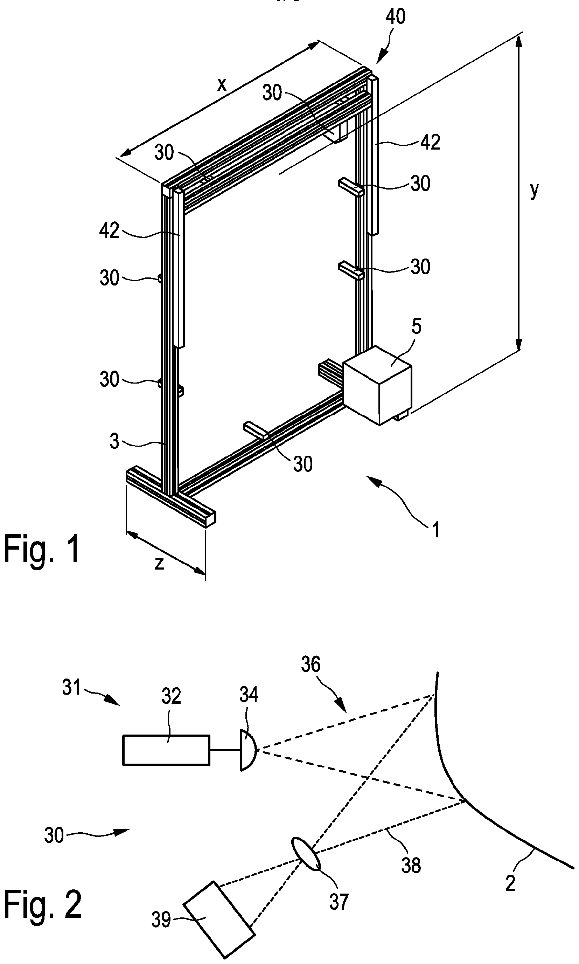

Fig. 1 zeigt schematisch ein Ausführungsbeispiel einer erfindungsgemäßen Messeinrichtung 1. Die Messeinrichtung 1 umfasst eine Trägereinheit 3, die in Form eines Rahmens ausgestaltet ist sowie eine Bewegungseinheit 5, mittels derer der Rahmen 3 bewegt werden kann. In diesem Beispiel erstreckt sich der Rahmen in einer Breite x und einer Höhe y und ist mittels der Bewegungseinheit 5 in einer Längsrichtung z, die senkrecht sowohl auf der Breite x als auch der Höhe y steht, bewegbar. Die Breite x und die Höhe y definieren in diesem Ausführungsbeispiel die Messebene der Messeinrichtung 1. Die Auswahl der Achsen ist beispielhaft und kann in anderen Ausführungsbeispielen anders sein. Obwohl in diesem Beispiel Breite x, Höhe y und Länge z jeweils senkrecht aufeinander stehen, kann dies in anderen Ausführungsbeispielen auch anders sein.

Die Bewegungseinheit 5 ist in diesem Beispiel ein Elektromotor, der die Messeinrichtung 1 entlang der Längsrichtung z über eine Schiene (nicht gezeigt) auf dem Boden, auf dem der Rahmen 3 platziert ist, beispielsweise mittels Rädern bewegt.

Innerhalb des Rahmens 3 sind in diesem Beispiel sieben Sensoreinheiten 30 bereitgestellt. Die Sensoreinheiten 30 sind jeweils von dem Rahmen 3 aus in der Messebene nach innen gerichtet, auf den Bereich, in den ein Messobjekt einzuführen ist. In diesem Beispiel sind zwei Sensoreinheiten 30, nämlich die am oberen Ende des Rahmens 3 angeordneten, mittels einer Zustelleinheit 40 an dem Rahmen 3 befestigt. Die Zustelleinheit 40 ermöglicht, dass sich die Sensoreinheit 30, die über die Zustelleinheit 40 an dem Rahmen 3 befestigt ist, in der Messebene bewegt werden kann. In diesem Beispiel umfasst die Zustelleinheit 40 zwei parallele lineare Zustellelemente 42, die an vertikalen Teilabschnitten des Rahmen 3 angeordnet sind und einen horizontalen Träger zwischen den beiden linearen Zustellelementen 42 in Höhenrichtung y bewegbar lagern. In anderen Ausführungsbeispielen ist nur einer oder mehr als zwei der Sensoreinheiten 30 mittels der Zustelleinheit 40 an dem Rahmen 3 befestigt, insbesondere vorzugsweise alle der Sensoreinheiten 30. Jeder der Sensoreinheiten 30 kann über eine eigene Zustelleinheit 40 verfügen, oder mehrere der Sensoreinheiten 30 können mit einer gemeinsamen Zustelleinheit 40 zugestellt werden. Das Zustellen ermöglicht, dass die Abstände der Sensoreinheiten 30 von der Oberfläche des Messobjektes derart einstellbar sind, dass eine Auflösung der Vermessung der Oberfläche immer hinreichend hoch ist. Dies ist besonders bei Messobjekten, die große Unterschiede im Querschnitt zeigen von besonderer Relevanz.

Obwohl die Sensoreinheiten 30 in diesem Ausführungsbeispiel in einem Rahmen 3 der Messeinrichtung 1 angeordnet sind, so sind auch sämtliche andere Anordnungen, bei denen mehrere Sensoreinheiten 30 zur Vermessung eines Messobjektes um das Messobjekt herum anordenbar sind, dem erfindungsgemäßen Verfahren zur Referenzierung zugänglich, da dieses nicht durch die mechanische Anordnung der Sensoreinheiten 30 eingeschränkt ist.

Fig. 2 zeigt schematisch das Funktionsprinzip eines Laserschnittsensors als Beispiel einer Sensoreinheit 30. Die Sensoreinheit 30 ist in diesem Beispiel ein Laserlichtschnittsensor, der eine Laserlichtquelle 32, eine Zylinderlinse 34, eine Linse 37 und einen Detektor, beispielsweise eine Kamera 39, umfasst. Die Kombination von Laserlichtquelle 32 und Zylinderlinse 34 ist hier ein Beispiel einer Quelle 31 strukturierter Beleuchtung, die in anderen Beispielen auch abweichend komplexere strukturierte Beleuchtungen als Laserlinien erzeugen kann.

Das beispielhafte von der Laserlichtquelle 32 ausgesandte punktförmige Licht wird mittels der Zylinderlinse 34 in eine Linie aufgespalten. Die Linie tritt aus der Sensoreinheit 30 aus und auf eine Oberfläche eines Messobjektes 2 auf. Das eintreffende Laserlicht 36 wird an der Oberfläche 2 reflektiert und tritt als reflektierte Linie 38 über die Linse 37 in die Kamera 39 ein. Durch den Versatz der auf der Kamera 39 auftreffenden Laserlinie kann das Höhenprofil der Oberfläche 2 errechnet werden. Laserlichtschnittsensoren basieren auf dem bekannten Prinzip der Lasertriangulation, wobei die punktförmige Lichtquelle in eine zweidimensionale Linie aufgeweitet wird. Bei dem Laserlichtschnittsensor handelt es sich nur um ein Beispiel von zur Vermessung von Oberflächen geeigneten Sensoreinheiten 30, die in dem erfindungsgemäßen Messsystem 1 sowie den hierin beschriebenen Verfahren eingesetzt werden können.

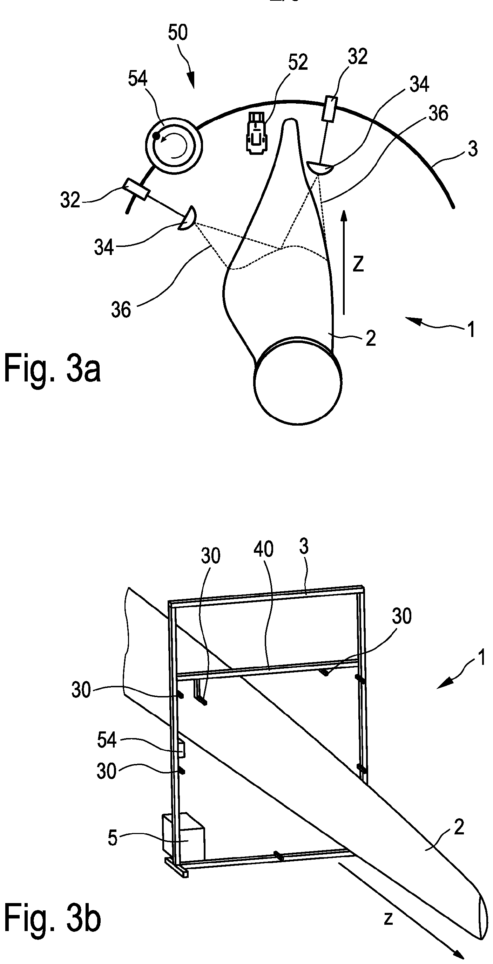

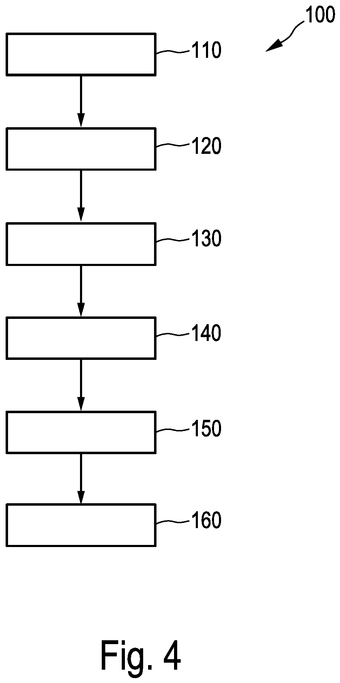

Fig. 3a zeigt schematisch und exemplarisch eine Positionsbestimmungseinheit 50, die in einer Messeinrichtung 1 zum Einsatz kommt. In Fig. 3a sind die Sensoreinheiten 30 schematisch durch die Laserlichtquelle 32 und die Zylinderlinse 34 gezeigt, die auf einem schematischen Rahmen 3, der in Form eines Halbkreises skizziert ist, angeordnet sind. Weitere Elemente der Sensoreinheiten 30 sind zur besseren Darstellbarkeit weggelassen. Ferner zeigt Fig. 4a ein Rotorblatt als Beispiel eines Messobjektes 2, das in Längsrichtung z entlang des Rahmens 3 bewegt wird.

Die Positionsbestimmungseinheit 50 weist einen Positionslaser 52 und einen Retroreflektor 54 auf. Der Positionslaser 52 ist stationär und unabhängig von dem Rahmen 3 angeordnet. Er bewegt sich nicht, wenn der Rahmen 3 mittels der Bewegungseinheit 5 bewegt wird. Der Positionslaser 52 misst den Abstand zu dem Retroreflektor 54, der sich mit dem Rahmen 3 bewegt. Der Retroreflektor 54 reflektiert die von dem Positionslaser 52 einfallende Strahlung weitgehend unabhängig von der Ausrichtung des Retroreflektors 54 bezüglich des Positionslasers 52 zurück zu dem Positionslaser 52. Der Retroreflektor 54 wird vorzugsweise kontinuierlich auf einer Kreis- oder Ellipsenbahn geführt. Die Kreis- oder Ellipsenbahn des Retroreflektors 54 kann bezüglich einer Anbringfläche, die an dem Rahmen 3 befestigt ist, oder bezüglich des gesamten Rahmens 3 erfolgen. Indem sich der Rahmen 3 in Längsrichtung Z bewegt und der Retroreflektor 54 sich gleichzeitig auf einer Kreis- oder Ellipsenbahn befindet, ergibt sich eine helixartige Trajektorie, woraus zu jedem Zeitpunkt die Position und Orientierung des Rahmens 3 der Messeinrichtung 1 bestimmt werden kann.

Fig. 3b zeigt schematisch und exemplarisch die in Fig. 1 gezeigte Messeinrichtung 1 zusammen mit dem Messobjekt 2, in diesem Beispiel der Blattspitze eines Rotorblattes. Der Rahmen 3 wird entlang des Rotorblattes 2 geführt, wobei die Sensoreinheiten 30 kontinuierlich oder mit bestimmten Abständen in Längsrichtung des Rotorblattes Profilschnitte des Messobjektes 2 erfassen. Anstelle des rotierenden Retroreflektors 54 ist in dem in Fig. 3b gezeigten Beispiel ein stationärer Retroreflektor 54 gezeigt. Auch in diesem Beispiel kann der Retroreflektor 54 eingesetzt werden, um die Entfernung von dem Positionslaser 52 (in Fig. 3b nicht gezeigt) zu bestimmen.

Die erfindungsgemäße Messeinrichtung 1 ist geeignet, eine dreidimensionale Oberflächengeometrie eines Messobjektes 2 automatisiert zu erfassen. Insbesondere für große Dimensionen des Messobjektes 2 und der für eine aussagekräftige Bestimmung der Oberflächengeometrie des Messobjektes 2 erforderlichen hohen Messauflösung erfolgt die Messung demnach nicht von einem stationären Ort der Messeinrichtung 1, sondern von verschiedenen Positionen, indem der Rahmen 3 mittels der Bewegungseinheit 5 entlang des Messobjektes 2 bewegt wird und die Sensoreinheiten 30 somit während des Messvorganges eine Relativbewegung zum Messobjekt 2 ausführen. Eine Trägereinheit beispielsweise in Form eines Rahmens 3 mit mehreren Sensoreinheiten 30, die beispielsweise optische Triangulationssensoren wie Laserlichtschnittsensoren sind, wird beispielsweise auf einem Schienensystem am Messobjekt 2 entlanggeführt und mithilfe einer Positionsbestimmungseinheit 50 präzise verfolgt. Die Positionsbestimmungseinheit 50 ist beispielsweise ein Positionslaser 52, der den Abstand zu einem Retroreflektor 54, der auf dem Rahmen 3 angebracht ist, bestimmt. So entsteht eine Sequenz vollständiger Profilschnitte des Messobjekts 2. Einzelmessungen von Profilschnitten können zu einem dreidimensionalen Gesamtmodell mit hoher Auflösung fusioniert werden. Auch autonome oder vorprogrammierte Flurförderzeuge könnten hier als Bewegungseinheit 5 zum Bewegen einer Trägereinheit 3 zum Einsatz kommen. Auch könnte das Portal frei manipulierbar an einem Industrieroboter befestigt sein, um beliebige Raumkurven als Verfahrweg entlang eines Messobjektes beschreiben zu können.

Die Zustellkomponente 40, die eingerichtet ist, den Abstand der Sensoreinheiten 30 zu dem Messobjekt 2 einzustellen, sorgt dafür, dass die Messauflösung der Oberfläche des Messobjekts 2 unabhängig von dem Durchmesser des Messobjekts 2 an der Position, an der der aktuelle Profilschnitt gemessen wird, hinreichend groß ist. Durch Vergleich mit beispielsweise einem CAD-Modell können Abweichungen des dreidimensionalen Gesamtmodells bestimmt werden.

Eine insbesondere bei langen Messobjekten 2, wie Rotorblättern einer Windenergieanlage, auftretende signifikante schwerkraftbedingte Durchbiegung kann simuliert und für die Auswertung berücksichtigt werden. Die von dem Messsystem 1 erfassten Messdaten bilden im Falle von Rotorblättern einer Windenergieanlage beispielsweise die Grundlage für eine Strömungssimulation zur Leistungsbewertung beziehungsweise zur akustischen Bewertung des Rotorblattes.

Mit der Messeinrichtung 1 kann erreicht werden, dass die Gesamtmesszeit für ein Rotorblatt nicht länger als 30 Minuten beträgt. In dieser Zeit kann mit der Messeinrichtung 1 in Längsrichtung des Messobjekts 7 alle 2 Millimeter ein Profilschnitt aufgenommen werden. Die lokale Messungenauigkeit an Profilvorder- und -hinterkante kann mit dem erfindungsgemäßen Messsystem in dem Bereich von 0,05 bis 0,17 mm auf der Druckseite und von 0,07 bis 0,41 mm auf der Saugseite betragen. Innerhalb dieser Toleranzbereiche kann eine Garantie für Leistungswerte beziehungsweise akustischer Werte des Rotorblattes eingehalten werden.

Die Figurenbeschreibung der Figuren 4 bis 7 zum Erreichen der benötigten Auflösung wird im Folgenden mit Verweis auf Figuren 4 bis 7 das erfindungsgemäße Verfahren zur Referenzierung mehrerer Sensoreinheiten beschrieben.

Fig. 4 zeigt schematisch ein Flussdiagramm eines erfindungsgemäßen Verfahrens 100 zur Referenzierung mehrerer Sensoreinheiten, beispielsweise der Sensoreinheiten 30. Die Sensoreinheit weist ganz allgemein eine Quelle strukturierter Beleuchtung und im festen Abstand dazu eine kalibrierte optische Kamera auf. Die Quelle strukturierter Beleuchtung kann beispielsweise ein Laserstrahl sein, der mittels einer Zylinderlinse in eine Linie aufgeweitet wird, wie in den Beispielen der Figuren 1 bis 3 gezeigt. Es eignen sich aber auch sonstige Lichtmuster mit bekannter Struktur, mittels der die Objekte beleuchtet werden, die eine 3D Höheninformation zur Rekonstruktion der Oberfläche des Objektes ermöglichen. Die Kamerakalibrierung schließt die Kalibrierung intrinsischer und extrinsischer Kameraparameter ein, die nach bekannten Verfahren ermittelt werden.

Die Quelle strukturierter Beleuchtung sendet einen Kegel aus, der sich im Fall einer Laserlinie auf eine Ebene reduziert. Auch dieser Kegel ist bezüglich der Kamera kalibriert, was aus dem Strahlengang der strukturierten Beleuchtung eine Triangulation der Objektpunkte, an denen das eintreffende Licht reflektiert wird, das dann in der optischen Kamera eingefangen wird, ermöglicht. Nachdem die Sensoreinheit dann kalibriert ist, kann die Zuordnung zwischen zweidimensionalen Bildpunkten des Lichtes, das von der Quelle strukturierter Beleuchtung ausgesandt und auf dem Messobjekt reflektiert wurde, präzise einem Bildpunkt in dreidimensionalen Koordinaten zugeordnet werden, der der Oberfläche des Messobjektes entspricht. Anders ausgedrückt, die Kalibrierung der Sensoreinheit ermöglicht eine präzise Zuordnung zwischen der Abbildung der strukturierten Beleuchtung, die die Kamera in zweidimensionalen Bildpunkten aufnimmt, und der diese Abbildung zugrundeliegenden Reflektionen auf der Objektoberfläche in dreidimensionalen Kamerakoordinaten.

Das der Erfindung zugrundeliegende Problem tritt dann auf, wenn mehrere Sensoreinheiten, die zur Vermessung einer dreidimensionalen Oberfläche um das Messobjekt anzuordnen sind, zueinander referenziert werden müssen. Insbesondere im Fall komplexer Geometrien der Messobjekte, beispielsweise hochgradig gekrümmter Objekte oder Objekte mit Hinterschneidungen oder Einschlüssen, ist die Verwendung mehrerer Sensoreinheiten häufig die einzige Lösung eine Messung der Oberfläche des Messobjektes in hinnehmbarer Zeit zu erreichen.

Das Verfahren 100 zur Referenzierung mehrerer Sensoreinheiten umfasst zunächst in Schritt 110 ein Bestimmen von Positionen mehrerer Referenzpunkte in zweidimensionalen Bildkoordinaten von Kameras einer ersten und einer zweiten Sensoreinheit 30. Die mehreren Referenzpunkt können beispielsweise auf einem einfachen zweidimensionalen Referenzobjekt, wie einem zweidimensionalen Schachbrettmuster, angeordnet sein. An die Referenzpunkte ist keine weitere Anforderung gestellt, in anderen Beispielen sind auch Referenzpunkte, die nicht koplanar (beispielsweise nicht in einem zweidimensionalen Schachbrettmuster) liegen, vorstellbar. Die Positionen der mehreren Referenzpunkte werden in der gleichen Lage der Referenzpunkte, das heißt beispielsweise des Referenzobjektes, von mindestens der ersten und zweiten Sensoreinheit, die zueinander zu referenzieren sind, bestimmt. Im einfachsten Fall wird das beispielhafte Schachbrettmuster in der gleichen Lage demnach von der ersten und zweiten Kamera aufgenommen. Die Erkennung der Referenzpunkte in den zweidimensionalen Bildkoordinaten erfolgt durch Auswertung der aufgenommenen Bilder.

In Schritt 120 wird die Position der mehreren Referenzpunkte in dreidimensionalen Kamerakoordinaten der ersten Sensoreinheit und der zweiten Sensoreinheit rekonstruiert. Durch die Rekonstruktion der Positionen der mehreren Referenzpunkte kann beispielsweise die Lage einer Ebene des Referenzobjektes, in dem die Referenzpunkte liegen, bestimmt werden. Anders ausgedrückt wird je eine Koordinatentransformation zwischen dem Kamerakoordinatensystem und dem Koordinatensystem der Referenzpunkte der für jede der Sensoreinheiten.

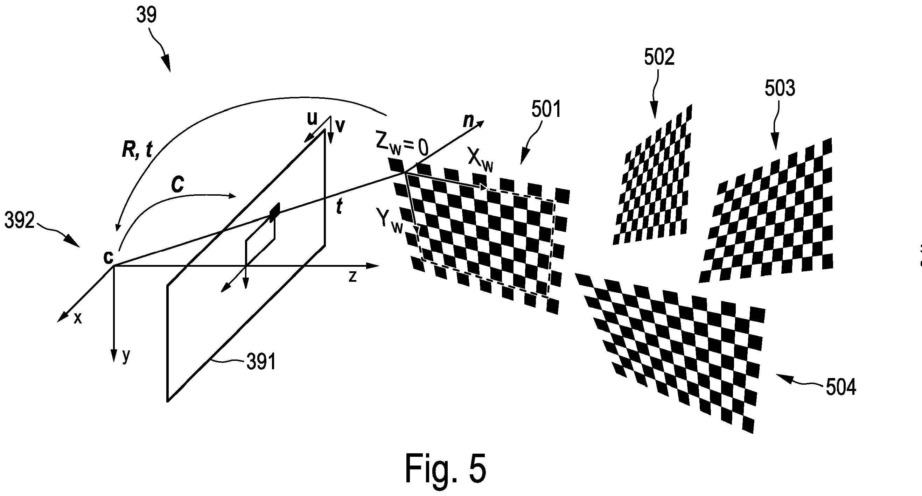

Mit Verweis auf Fig. 5 wird schematisch das Prinzip der Kamerakalibrierung gezeigt, das ebenso zum Rekonstruieren der Positionen der Referenzpunkte zum Einsatz kommt. Für die beispielshafte planare Kalibrierung der Kamera 39 werden mehrere Aufnahmen des zweidimensionalen Schachbrettmusters in Pose 501, 502, 503 und 504 erfasst. Für jede der Posen soll dann eine Rotationsmatrix R sowie ein Translationsvektor t bestimmt werden, der eine Abbildung des zweidimensionalen Schachbrettmusters auf einer Sensorebene 391 der Kamera 39 in den zweidimensionalen Bildpunkten u und v in dreidimensionale Kamerakoordinaten x, y und z transformiert. Eine Linse 392 der Kamera ist hinter der Sensorebene 391 eingezeichnet, da dies optisch dem gleichen Strahlengang entspricht, als wenn die Sensorebene spiegelverkehrt und hinter der Linse 392 eingezeichnet wäre, dies aber einfacher darstellbar ist. Eine Matrix C beschreibt den Zusammenhang zwischen der Sensorebene 391 und den Kamerakoordinaten x, y und z bezügliche des in der Linse 392 angeordneten Koordinatenursprungs c. Es ist nun einfach möglich, die auf der Ebene liegenden Punkte mit den Koordinaten x_{w}, y_{w} und z_{w} = 0 zu beschrieben und die Transformation über einen Normalvektor n, der senkrecht auf dem Schachbrettmuster steht, zu bestimmen. Diese Kalibrierung nach Zhang ist im Wesentlichen bekannt, wobei auch andere Kalibrierungsmethoden, insbesondere auch unter Verwendung anderer Referenzobjekte, vorstellbar sind.

Für den Schritt 120 sind dann, nach erfolgter Kamerakalibrierung, nur die Referenzpunkte in einer einzigen Pose nötig. Die bekannte Kamerakalibrierung ermöglicht nämlich, dass die mehreren Referenzpunkte aus den zweidimensionalen Bilddaten in dreidimensionale Kamerakoordinaten rekonstruiert werden. Somit liegen für mehrere Sensoreinheiten Positionen in dreidimensionalen Kamerakoordinaten der gleichen Referenzpunkte vor.

In Schritt 130 wird dann, basierend auf den rekonstruierten Positionen, eine Transformation zwischen den dreidimensionalen Kamerakoordinaten der ersten Sensoreinheit und den dreidimensionalen Kamerakoordinaten der zweiten Sensoreinheit bestimmt.

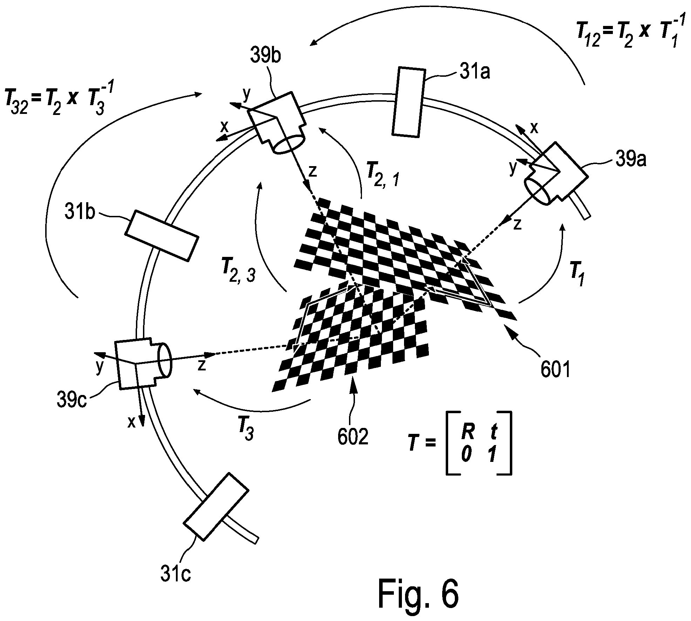

Die Referenzierung mehrerer Sensoreinheiten wird schematisch mit Verweis auf Fig. 6 beschrieben. Eine erste Kamera 39a und eine zweite Kamera 39b erfassen die gleiche Position des beispielhaften zweidimensionalen Schachbrettmusters 601 als Referenzobjekt, das Referenzpunkte aufweist. Weiter ist eine dritte Kamera 39c gezeigt, die zusammen mit der zweiten Kamera 39b eine zweite Ansicht des Schachbrettmusters 602 erfasst. Dies ermöglicht, dass die Kamera 39a bezüglich der Kamera 39b und die Kamera 39c ebenfalls bezüglich der Kamera 39b referenziert wird. Eine direkte Referenzierung der Kamera 39c bezüglich der Kamera 39a ist nicht möglich, da die Kamera 39c keinen geeigneten Blick auf die Referenzfläche 601 hat. Bei anderen Anordnungen der Kameras 39a, 39b und 39c bzw. anderer Posen der Referenzpunkte bzw. des Referenzobjektes können auch sämtliche Kameras bezüglich einander direkt referenziert werden. Grundsätzlich ist aber auch eine indirekte Referenzierung möglich, wobei zwei Sensoreinheiten bzw. Kameras über eine Zwischeneinheit, hier die Kamera 39b, referenziert werden.

Die Translationsmatrix T1 bezeichnet eine Matrix, wie angegeben, die sich aus der Rotation R und dem Translationsvektor t zusammensetzt. Die extrinsische Transformation T ermöglicht demnach eine Transformation von Welt in Kamerakoordinaten. Zum Bestimmen dieser Transformation wird beispielsweise der Perspective-*n*-Point Algorithmus bzw. vorzugsweise ein nicht iterativer Perspective-*n*-Point Ansatz, der als efficient Perspective-*n*-Point Algorithmus bekannt ist (ePnP), verwendet. Demnach kann für mehrere Sensoren in der gleichen Pose, beispielsweise 601, des beispielhaften zweidimensionalen Schachbrettmusters eine extrinsische Transformation, beispielsweise T₁ für Kamera 39a und T₂ für Kamera 39b erhalten werden. Die Registrierung zwischen den beiden Sensoreinheiten kann dann in der Form T₁₂ = T₂ T₁⁻¹ erhalten werden. Es hat sich allerdings herausgestellt, dass bei dieser Art der Sensorreferenzierung keine hinreichende Genauigkeit erreicht wird. Die Referenzierung muss demnach weiter verbessert werden.

In einem Schritt 140 wird dafür die Position der Abbildung der strukturierten Beleuchtung in den dreidimensionalen Kamerakoordinaten der ersten Sensoreinheit und der zweiten Sensoreinheit rekonstruiert. Dafür wird die strukturierte Beleuchtung der Quellen 31a, 31b und/oder 31c zeitlich hintereinander durch die jeweiligen Kameras 39a, 39b und 39c aufgenommen. Die in Schritt 140 rekonstruierte Position der Abbildung der strukturierten Beleuchtung unterliegt den gleichen Schätzungsfehlern, wie die in Schritt 120 bestimmte Rekonstruktion der Referenzpunkte.

In Schritt 150 wird zusätzlich zu der in Schritt 140 rekonstruierten Position eine triangulierte Position der Abbildung basierend auf dem kalibrierten Kegel der strukturierten Beleuchtung bestimmt. Im Gegensatz zu der rekonstruierten Position unterliegt die triangulierte Position nicht dem Fehler der Posenschätzung.

Schließlich wird in Schritt 160 die Transformation zwischen den dreidimensionalen Kamerakoordinaten der ersten Sensoreinheit und den dreidimensionalen Kamerakoordinaten der zweiten Sensoreinheit basierend auf der in Schritt 150 bestimmten triangulierten Position korrigiert.

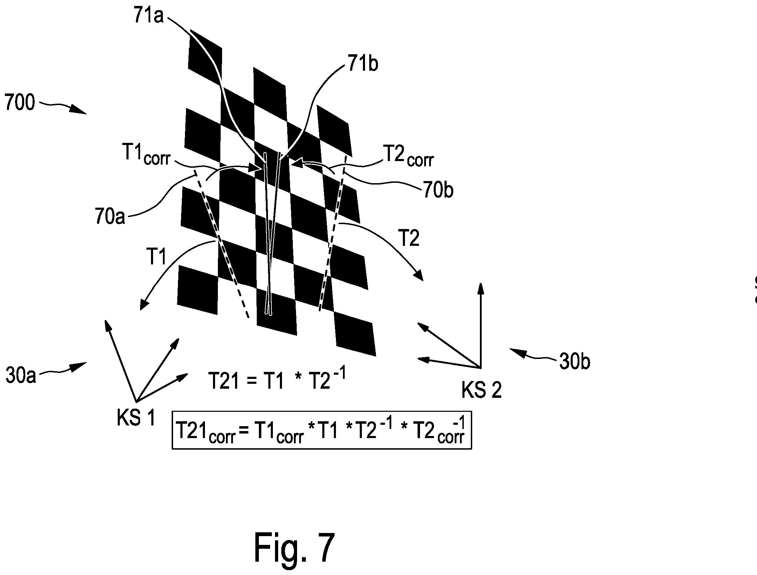

Die Korrektur der Referenzierungstransformation wird schematisch und exemplarisch mit Verweis auf Fig. 7 beschrieben. Um die ursprünglich rekonstruierten Posen zu korrigieren, wird eine Starrkörpertransformation zwischen rekonstruierten und triangulierten Daten durchgeführt. Für die erste Sensoreinheit 30a ist die Position der Abbildung der strukturierten Beleuchtung sowohl als rekonstruierte Linie 70a als auch als triangulierte Linie 71a gezeigt. In diesem Beispiel sind die Abbildungen der strukturierten Beleuchtung Laserlinienschnitte, die allerdings in anderen Beispielen auch andere Formen annehmen können. Zwischen der rekonstruierten Abbildung 70a und der triangulierten Abbildung 71a, die als korrekte Position angenommen wird, wird eine Korrekturtransformation T1_{corr} bestimmt. Gleiches erfolgt für die zweite Sensoreinheit 30b, für die eine rekonstruierte Abbildung 70b und eine triangulierte Abbildung 71b gezeigt sind, zwischen denen eine Korrekturtransformation T2_{corr} bestimmt wird. Vorzugsweise wird das Referenzobjekt hierzu in einer weiteren Pose aufgenommen und Schätzungen der Pose sowie die Rekonstruktionen und Triangulationen werden dann wiederholt. In dem beispielhaften Fall von Laserschnittsensoren sind die triangulierten Linien in sämtlichen Posen des Referenzobjektes koplanar, während es die abgeschätzten Rekonstruktionsdaten nicht notwendigerweise sind, da es Fehler in der Schätzung der Pose gibt. Dies trifft natürlich allgemeiner auch für sämtliche Formen strukturierter Beleuchtung entsprechend zu. Unter Berücksichtigung dieser Korrekturtransformationen T1_{corr} und T2_{corr} wird dann eine korrigierte Referenzierung der zweiten Sensoreinheit 30b zu der ersten Sensoreinheit 30a bzw. umgekehrt über die Transformation T21_{corr} erhalten. Entsprechende Korrekturen können in Anordnungen mit mehr als zwei Sensoreinheiten auch für alle weiteren Sensoreinheiten bestimmt werden.

Mit der erfindungsgemäßen Sensorregistrierung werden Fehlausrichtungen bzw. gewünschte Verlagerungen und Verkippungen von Sensoren erkannt und angemessen in dem Gesamtmodell registriert. Das vorgeschlagene Verfahren kombiniert somit eine Schätzung der Pose, die beispielsweise mit dem ePnP Algorithmus durchgeführt wird, und einen Ansatz zum Bestimmen einer Starrkörpertransformation zu den vertrauenswürdigen Daten, die durch triangulierte Daten für jeden Sensor gegeben sind. Die Flexibilität des Verfahrens beruht auf der Anwendbarkeit betreffend andere Algorithmen für die Schätzung der Pose, wie beispielsweise Polargeometrie, sowie die verwendeten Referenzobjekte, die zweidimensional oder dreidimensional sein können und lediglich mehrere Referenzpunkte definieren müssen, somit auch einfache geometrische Formen sein können. Beispielsweise können die Posen auch durch die direkte Lineartransformation (DLT) und die für die vorab verwendete Kamerakalibrierung verwendeten Referenzobjekte abgeschätzt werden. Es muss einzig berücksichtigt werden, dass es genügend Informationen des Referenzobjektes in dem Überlappungsbereich beider angrenzender Kamerasysteme gibt und dass die Kegel der strukturierten Beleuchtung das Referenzobjekt schneiden.

Obwohl die gezeigten Ausführungsbeispiele als Beispiel eines Messobjektes ein Rotorblatt 2 einer Windenergieanlage verdeutlichen, sind die durch die Erfindung erzielten Wirkungen und Vorteile auch auf andere Messobjekte, insbesondere längliche Messobjekte mit variierendem Querschnitt anwendbar.

## Patentansprüche

1. Verfahren zur Referenzierung mehrerer Sensoreinheiten (30), die zur Vermessung einer dreidimensionalen Oberfläche eines Messobjektes (2) um das Messobjekt (2) herum anordenbar sind,
wobei jede Sensoreinheit (30) eine Quelle strukturierter Beleuchtung (31) und in festem Abstand dazu eine kalibrierte optische Kamera (39) aufweist,
wobei ein Kegel der Quelle strukturierter Beleuchtung (31) bezüglich der Kamera (39) kalibriert ist und eine Transformation der Abbildung der strukturierten Beleuchtung, die von der Kamera (39) aufgenommen wird, aus zweidimensionalen Bildpunkten in dreidimensionale Kamerakoordinaten durch die Kalibrierung der Sensoreinheit (30) bestimmt ist,
wobei das Verfahren die folgenden Schritte aufweist:
- Bestimmen (110) von Positionen mehrerer Referenzpunkte in zweidimensionalen Bildkoordinaten von Kameras einer ersten und einer zweiten Sensoreinheit,
- Rekonstruieren (120) der Positionen der mehreren Referenzpunkte in dreidimensionalen Kamerakoordinaten der ersten Sensoreinheit und der zweiten Sensoreinheit,
- Bestimmen (130) einer Transformation zwischen den dreidimensionalen Kamerakoordinaten der ersten Sensoreinheit und den dreidimensionalen Kamerakoordinaten der zweiten Sensoreinheit basierend auf den rekonstruierten Positionen der Referenzpunkte,
- Rekonstruieren (140) der Position der Abbildung der strukturierten Beleuchtung in den dreidimensionalen Kamerakoordinaten der ersten Sensoreinheit und der zweiten Sensoreinheit anhand der rekonstruierten Referenzpunkte,
- Bestimmen (150) einer triangulierten Position der Abbildung der strukturierten Beleuchtung in dreidimensionalen Kamerakoordinaten der ersten Sensoreinheit und der zweiten Sensoreinheit und
- Korrigieren (160) der Transformation zwischen den dreidimensionalen Kamerakoordinaten der ersten Sensoreinheit und den dreidimensionalen Kamerakoordinaten der zweiten Sensoreinheit basierend auf den triangulierten Positionen der Abbildung der strukturierten Beleuchtung.

2. Verfahren zur Referenzierung mehrerer Sensoreinheiten (30), die zur Vermessung einer dreidimensionalen Oberfläche eines Messobjektes (2) um das Messobjekt (2) herum anordenbar sind,
wobei jede Sensoreinheit (30) eine Quelle strukturierter Beleuchtung (31) und in festem Abstand dazu eine kalibrierte optische Kamera (39) aufweist,
wobei ein Kegel der Quelle strukturierter Beleuchtung (31) bezüglich der Kamera (39) kalibriert ist und eine Transformation der Abbildung der strukturierten Beleuchtung, die von der Kamera (39) aufgenommen wird, aus zweidimensionalen Bildpunkten in dreidimensionale Kamerakoordinaten durch die Kalibrierung der Sensoreinheit (30) bestimmt ist,
wobei das Verfahren die folgenden Schritte aufweist:
- Bestimmen (110) von Positionen mehrerer Referenzpunkte in zweidimensionalen Bildkoordinaten von Kameras einer ersten und einer zweiten Sensoreinheit,
- Bestimmen (120) je einer Koordinatentransformation zwischen dem Kamerakoordinatensystem und dem Koordinatensystem der Referenzpunkte der ersten und der zweiten Sensoreinheit,
- Rekonstruieren (140) der Position der Abbildung der strukturierten Beleuchtung in den dreidimensionalen Kamerakoordinaten der ersten Sensoreinheit und der zweiten Sensoreinheit anhand der bestimmten Koordinatentransformationen,
- Bestimmen (150) einer triangulierten Position der Abbildung der strukturierten Beleuchtung in dreidimensionalen Kamerakoordinaten der ersten Sensoreinheit und der zweiten Sensoreinheit und
- Ermitteln (160) einer Korrekturtransformation zwischen der rekonstruierten Abbildung und der triangulierten Abbildung für jede Sensoreinheit, wodurch die bestimmten Koordinatentransformationen zwischen dem Kamerakoordinatensystem und dem Koordinatensystem der Referenzpunkte der ersten und der zweiten Sensoreinheit korrigiert werden, wobei eine Referenzierung von der ersten Sensoreinheit zur zweiten Sensoreinheit anhand der korrigierten Transformationen hergestellt wird.

3. Verfahren nach Anspruch 1 oder 2, wobei die Referenzpunkte Punkte eines Referenzobjekts in zwei oder mehr Posen sind, die rekonstruierte und triangulierte Position der Abbildung der strukturierten Beleuchtung für jede dieser Posen bestimmt wird.

4. Verfahren nach einem der vorstehenden Ansprüche, wobei die Sensoreinheiten (30) Laserlinienquellen als Quelle strukturierter Beleuchtung (31) aufweisen und die Abbildung der strukturierten Beleuchtung eine Laserlinie ist.

5. Verfahren nach einem der vorstehenden Ansprüche, wobei die Referenzierung mehr als zwei Sensoreinheiten betrifft, wobei sämtliche der Sensoreinheiten zueinander referenziert werden.

6. Verfahren nach Anspruch 5, wobei sämtliche der Sensoreinheiten direkt oder indirekt zu der ersten Sensoreinheit referenziert werden.

7. Verfahren nach einem der vorstehenden Ansprüche, wobei die Sensoreinheiten (30) in einer Ebene angeordnet werden.

8. Verfahren nach Anspruch 7, wobei die Sensoreinheiten (30) Laserlinienquellen als Quelle strukturierter Beleuchtung (31) aufweisen und die Laserebenen der Sensoreinheiten im Wesentlichen übereinstimmen.

9. Verfahren nach einem der vorstehenden Ansprüche, wobei die relative Position der Sensoreinheiten (30) zueinander verändert wird, wobei die Referenzierung der Sensoreinheiten entsprechend der relativen Position der Sensoreinheiten angepasst wird.

10. Verfahren nach einem der vorstehenden Ansprüche 1 oder 3 bis 9, wenn rückbezogen auf Anspruch 1, wobei der Schritt des Rekonstruierens (120) der Position der mehreren Referenzpunkte in dreidimensionalen Kamerakoordinaten ein Perspective-*n*-Point Verfahren umfasst.

11. Verfahren nach einem der vorstehenden Ansprüche 1 oder 3 bis 10, wenn rückbezogen auf Anspruch 1, wobei der Schritt des Korrigierens (160) der Transformation zwischen den dreidimensionalen Kamerakoordinaten der ersten Sensoreinheit und den dreidimensionalen Kamerakoordinaten der zweiten Sensoreinheit basierend auf den triangulierten Positionen der Abbildungen der strukturierten Beleuchtung bzw. die ermittelte Korrekturtransformation eine Starrkörpertransformation umfasst.

12. Verfahren zum Vermessen eines Messobjektes (2), insbesondere eines Rotorblattes einer Windenergieanlage, umfassend ein Durchführen eines Verfahrens zur Referenzierung mehrerer Sensoreinheiten (30) nach einem der vorstehenden Ansprüche, wobei das Messobjekt (2) mit mehreren der Sensoreinheiten (30) vermessen wird, wobei die Sensoreinheiten zum Erfassen eines Oberflächenausschnittes des Messobjektes (2) eingerichtet sind, wobei die Sensoreinheiten (30) dazu insbesondere in einer Messebene angeordnet sind.

13. Verfahren nach Anspruch 12, wobei die Sensoreinheiten relativ zu dem Messobjekt (2) bewegt werden und mehrere Oberflächenausschnitte zu einer Oberfläche des Messobjektes zusammenfügen.

14. Verfahren nach Anspruch 12, wobei die relativen Abstände der Sensoreinheiten (30) zueinander an verschiedenen Positionen des Messobjektes verändert werden, wobei die Referenzierung der Sensoreinheiten (30) an die relativen Abstände der Sensoreinheiten (30) angepasst wird.

15. Messeinrichtung zur Vermessung einer Oberfläche eines Messobjektes (2), insbesondere eines Rotorblattes einer Windenergieanlage, wobei die Messeinrichtung mehrere in einer Messebene angeordnete Sensoreinheiten (30) und eine Positionsüberwachungseinheit (5) aufweist,
wobei die Messeinrichtung dazu eingerichtet ist, die Sensoreinheiten (30) mittels eines Verfahrens gemäß einem der Ansprüche 1 bis 11 in der Messebene zu referenzieren,
wobei die Positionsüberwachungseinheit (5) dazu eingerichtet ist, die Position der Messebene bezüglich einer ortsfesten Referenz zu bestimmen.

## Claims

1. A method for referencing a plurality of sensor units (30) that can be arranged around the measurement object (2) for surveying a three-dimensional surface of a measurement object (2),
wherein each sensor unit (30) comprises a source of structured illumination (31) and a calibrated optical camera (39) at a fixed distance therefrom,
wherein a beam of the source of structured illumination (31) is calibrated with respect to the camera (39), and a transformation of the image of the structured illumination, which is recorded by the camera (39), from two-dimensional image points into three-dimensional camera coordinates is determined through the calibration of the sensor unit (30),
wherein the method comprises the following steps:
- determination (110) of positions of a plurality of reference points in two-dimensional image coordinates of cameras of a first and a second sensor unit,
- reconstruction (120) of the positions of the plurality of reference points in three-dimensional camera coordinates of the first sensor unit and of the second sensor unit,
- determination (130) of a transformation between the three-dimensional camera coordinates of the first sensor unit and the three-dimensional camera coordinates of the second sensor unit on the basis of the reconstructed positions of the reference points,
- reconstruction (140) of the position of the image of the structured illumination in the three-dimensional camera coordinates of the first sensor unit and the second sensor unit on the basis of the reconstructed reference points,
- determination (150) of a triangulated position of the image of the structured illumination in three-dimensional camera coordinates of the first sensor unit and of the second sensor unit, and
- correction (160) of the transformation between the three-dimensional camera coordinates of the first sensor unit and the three-dimensional camera coordinates of the second sensor unit on the basis of the triangulated positions of the image of the structured illumination.

2. A method for referencing a plurality of sensor units (30) that can be arranged around the measurement object (2) for surveying a three-dimensional surface of a measurement object (2),
wherein each sensor unit (30) comprises a source of structured illumination (31) and a calibrated optical camera (39) at a fixed distance therefrom,
wherein a beam of the source of structured illumination (31) is calibrated with respect to the camera (39), and a transformation of the image of the structured illumination, which is recorded by the camera (39), is determined from two-dimensional image points into three-dimensional camera coordinates through the calibration of the sensor unit (30),
wherein the method comprises the following steps:
- determination (110) of positions of a plurality of reference points in two-dimensional image coordinates of cameras of a first and a second sensor unit,
- determination (120) in each case of a coordinate transformation between the camera coordinate system and the coordinate system of the reference points of the first and the second sensor unit,
- reconstruction (140) of the position of the image of the structured illumination in the three-dimensional camera coordinates of the first sensor unit and the second sensor unit on the basis of the determined coordinate transformations,
- determination (150) of a triangulated position of the image of the structured illumination in three-dimensional camera coordinates of the first sensor unit and of the second sensor unit, and
- ascertainment (160) of a correction transformation between the reconstructed image and the triangulated image for each sensor unit, whereby the coordinate transformations determined between the camera coordinate system and the coordinate system of the reference points of the first and the second sensor unit are corrected, wherein referencing from the first sensor unit to the second sensor unit is established on the basis of the corrected transformations.

3. The method as claimed in claim 1 or 2, wherein the reference points are points of a reference object in two or more poses, the reconstructed and triangulated position of the image of the structured illumination is determined for each of these poses.

4. The method as claimed in one of the preceding claims, wherein the sensor units (30) comprise laser line sources as the source of structured illumination (31) and the image of the structured illumination is a laser line.

5. The method as claimed in one of the preceding claims, wherein the referencing relates to more than two sensor units, wherein all of the sensor units are referenced to one another.

6. The method as claimed in claim 5, wherein all of the sensor units are referenced directly or indirectly to the first sensor unit.

7. The method as claimed in one of the preceding claims, wherein the sensor units (30) are arranged in one plane.

8. The method as claimed in claim 7, wherein the sensor units (30) comprise laser line sources as the source of structured illumination (31) and the laser planes of the sensor units are essentially coincident.

9. The method as claimed in one of the preceding claims, wherein the relative position of the sensor units (30) to one another is changed, while the referencing of the sensor units is adjusted according to the relative position of the sensor units.

10. The method as claimed in one of the preceding claims 1 or 3 to 9, when referring to claim 1, wherein the step of reconstructing (120) the position of the plurality of reference points in three-dimensional camera coordinates comprises a Perspective-n-Point method.

11. The method as claimed in one of the preceding claims 1 or 3 to 10, when referring to claim 1, wherein the step of correcting (160) the transformation between the three-dimensional camera coordinates of the first sensor unit and the three-dimensional camera coordinates of the second sensor unit on the basis of the triangulated positions of the images of the structured illumination or of the determined correction transformation comprises a rigid body transformation.

12. A method for surveying a measurement object (2), in particular a rotor blade of a wind power installation, including executing the method for referencing a plurality of sensor units (30) as claimed in one of the preceding claims, wherein the measurement object (2) is surveyed with the plurality of sensor units (30) , wherein the sensor units are configured for capturing a surface excerpt of the measurement object (2), while the sensor units (30) are arranged for this purpose in particular in one measurement plane.

13. The method as claimed in claim 12, wherein the sensor units are moved relative to the measurement object (2), and a plurality of surface excerpts combine into one surface of the measurement object.

14. The method as claimed in claim 12, wherein the relative distances of the sensor units (30) to one another are changed at different positions of the measurement object, while the referencing of the sensor units (30) is adapted to the relative distances of the sensor units (30).

15. A measuring device for surveying a surface of a measurement object (2), in particular a rotor blade of a wind power installation, wherein the measuring device comprises a plurality of sensor units (30) arranged in a measuring plane and a position monitoring unit (5),
wherein the measuring device is configured to reference the sensor units (30) according to a method as claimed in one of claims 1 to 11,
wherein the position monitoring unit (5) is configured to determine the position of the measurement plane with reference to a stationary reference.

## Revendications

1. Procédé pour référencer plusieurs unités de détection (30) qui, pour la mesure d'une surface tridimensionnelle d'un objet à mesurer (2), peuvent être agencées autour de l'objet à mesurer (2),
dans lequel chaque unité de détection (30) présente une source d'éclairage (31) structuré et, à distance fixe de celle-ci, une caméra (39) optique calibrée,
dans lequel un faisceau de la source d'éclairage (31) structuré est calibré par rapport à la caméra (39) et une transformation de la reproduction de l'éclairage structuré, qui est enregistrée par la caméra (39), est déterminée à partir de points d'image bidimensionnels dans des coordonnées de caméra tridimensionnelles par le calibrage de l'unité de détection (30),
dans lequel le procédé présente les étapes suivantes :
- la détermination (110) de positions de plusieurs points de référence dans des coordonnées d'image bidimensionnelles par des caméras d'une première et d'une seconde unité de détection,
- la reconstruction (120) des positions des plusieurs points de référence dans des coordonnées de caméra tridimensionnelles de la première unité de détection et de la seconde unité de détection,
- la détermination (130) d'une transformation entre les coordonnées de caméra tridimensionnelles de la première unité de détection et les coordonnées de caméra tridimensionnelles de la seconde unité de détection sur la base des positions reconstruites des points de référence,
- la reconstruction (140) de la position de la reproduction de l'éclairage structuré dans les coordonnées de caméra tridimensionnelles de la première unité de détection et de la seconde unité de détection à l'aide des points de référence reconstruits,
- la détermination (150) d'une position triangulée de la reproduction de l'éclairage structuré dans des coordonnées de caméra tridimensionnelles de la première unité de détection et de la seconde unité de détection et
- la correction (160) de la transformation entre les coordonnées de caméra tridimensionnelles de la première unité de détection et les coordonnées de caméra tridimensionnelles de la seconde unité de détection sur la base des positions triangulées de la reproduction de l'éclairage structuré.

2. Procédé pour référencer plusieurs unités de détection (30) qui, pour la mesure d'une surface tridimensionnelle d'un objet à mesurer (2), peuvent être agencées autour de l'objet à mesurer (2),
dans lequel chaque unité de détection (30) présente une source d'éclairage (31) structuré et, à distance fixe de celle-ci, une caméra (39) optique calibrée,
dans lequel un faisceau de la source d'éclairage (31) structuré, est calibré par rapport à la caméra (39) et une transformation de la reproduction de l'éclairage structuré qui est enregistrée par la caméra (39), est déterminée à partir de points d'image bidimensionnels dans des coordonnées de caméra tridimensionnelles par le calibrage de l'unité de détection (30),
dans lequel le procédé présente les étapes suivantes :
- la détermination (110) de positions de plusieurs points de référence dans des coordonnées d'image bidimensionnelles par des caméras d'une première et d'une seconde unité de détection,
- la détermination (120) de chaque transformation de coordonnées entre le système de coordonnées de caméra et le système de coordonnées des points de référence de la première et de la seconde unité de détection,
- la reconstruction (140) de la position de la reproduction de l'éclairage structuré dans les coordonnées de caméra tridimensionnelles de la première unité de détection et de la seconde unité de détection à l'aide des transformations de coordonnées déterminées,
- la détermination (150) d'une position triangulée de la reproduction de l'éclairage structuré dans des coordonnées de caméra tridimensionnelles de la première unité de détection et de la seconde unité de détection et
- l'identification (160) d'une transformation de correction entre la reproduction reconstruite et la reproduction triangulée pour chaque unité de détection, par quoi les transformations de coordonnées déterminées entre le système de coordonnées de caméra et le système de coordonnées des points de référence de la première et de la seconde unité de détection sont corrigées, dans lequel un référencement de la première unité de détection à la seconde unité de détection est établi à l'aide des transformations corrigées.

3. Procédé selon la revendication 1 ou 2, dans lequel les points de référence sont des points d'un objet de référence dans deux poses ou plus, la position reconstruite et triangulée de la reproduction de l'éclairage structuré est déterminée pour chacune de ces poses.

4. Procédé selon l'une des revendications précédentes, dans lequel les unités de détection (30) présentent des sources de lignes laser comme source d'éclairage (31) structuré et la reproduction de l'éclairage structuré est une ligne laser.

5. Procédé selon l'une des revendications précédentes, dans lequel le référencement concerne plus de deux unités de détection, dans lequel toutes les unités de détection sont référencées les unes par rapport aux autres.

6. Procédé selon la revendication 5, dans lequel toutes les unités de détection sont référencées directement ou indirectement par rapport à la première unité de détection.

7. Procédé selon l'une des revendications précédentes, dans lequel les unités de détection (30) sont agencées dans un plan.

8. Procédé selon la revendication 7, dans lequel les unités de détection (30) présentent des sources de ligne laser comme source d'éclairage (31) structuré et les plans de laser des unités de détection coïncident sensiblement.

9. Procédé selon l'une des revendications précédentes, dans lequel est modifiée la position relative des unités de détection (30) les unes par rapport aux autres, dans lequel le référencement des unités de détection est adapté selon la position relative des unités de détection.

10. Procédé selon l'une des revendications précédentes 1 ou 3 à 9, lorsqu'elles se réfèrent à la revendication 1, dans lequel l'étape de la reconstruction (120) de la position des plusieurs points de référence dans des coordonnées de caméra tridimensionnelles comporte un procédé en perspective-n-point.

11. Procédé selon l'une des revendications précédentes 1 ou 3 à 10, lorsqu'elles se réfèrent à la revendication 1, dans lequel l'étape de la correction (160) de la transformation entre les coordonnées de caméra tridimensionnelles de la première unité de détection et les coordonnées de caméra tridimensionnelles de la seconde unité de détection se basant sur les positions triangulées des reproductions de l'éclairage structuré ou la transformation de correction identifiée comporte une transformation de corps rigide.

12. Procédé pour la mesure d'un objet à mesurer (2), en particulier d'une pale de rotor d'une éolienne, comprenant une réalisation d'un procédé pour le référencement de plusieurs unités de détection (30) selon l'une des revendications précédentes, dans lequel l'objet à mesurer (2) est mesuré avec plusieurs des unités de détection (30), dans lequel les unités de détection sont conçues pour la détection d'un extrait de surface de l'objet à mesurer (2), dans lequel les unités de détection (30) sont agencées par rapport à celui-ci en particulier dans un plan de mesure.

13. Procédé selon la revendication 12, dans lequel les unités de détection sont déplacées par rapport à l'objet à mesurer (2) et plusieurs extraits de surface s'assemblent pour former une surface de l'objet à mesurer.

14. Procédé selon la revendication 12, dans lequel les distances relatives des unités de détection (30) les unes par rapport aux autres sont modifiées en des positions différentes de l'objet à mesurer, dans lequel le référencement des unités de détection (30) est adapté aux distances relatives des unités de détection (30).

15. Dispositif de mesure pour la mesure d'une surface d'un objet à mesurer (2), en particulier d'une pale de rotor d'une éolienne, dans lequel le dispositif de mesure présente plusieurs unités de détection (30) agencées dans un plan de mesure et une unité de surveillance de position (5),
dans lequel le dispositif de mesure est conçu afin de référencer les unités de détection (30) au moyen d'un procédé selon l'une des revendications 1 à 11 dans le plan de mesure,
dans lequel l'unité de surveillance de position (5) est conçue afin de déterminer la position du plan de mesure par rapport à une référence fixe.
